Europäisches Patentamt

(19) European Patent Office

Office européen des brevets

(11) Numéro de publication: **0 124 455**
**B1**

(12) **FASCICULE DE BREVET EUROPEEN**

(45) Date de publication du fascicule du brevet:
11.03.87

(21) Numéro de dépôt: **84420073.3**

(22) Date de dépôt: **19.04.84**

(51) Int. Cl.⁴: **F 25 B 29/00,** F 25 B 35/04,
F 25 B 17/08

(54) **Installation thermodynamique pour réfrigérer ou chauffer par adsorption sur un adsorbant solide et procédé pour la mise en oeuvre.**

(30) Priorité: **22.04.83 FR 8306882**

(43) Date de publication de la demande:
**07.11.84 Bulletin 84/45**

(45) Mention de la délivrance du brevet:
**11.03.87 Bulletin 87/11**

(84) Etats contractants désignés:
**DE GB IT NL SE**

(56) Documents cités:
**EP - A - 0 025 986
EP - A - 0 055 855
DE - C - 516 290
FR - A - 988 886
FR - A - 2 342 471
FR - A - 2 465 970
US - A - 1 954 056
US - A - 4 121 432
US - A - 4 372 376**

(73) Titulaire: **Centre Technique Industriel dit "CENTRE TECHNIQUE DES INDUSTRIES AERAULIQUES ET THERMIQUES", Plateau du Moulon, F-92402 Orsay (FR)**
Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Brandon, Bernard, 43 ter rue Gervais Bussière, F-69100 Villeurbanne (FR)**
Inventeur: **Bailly, André, 3, rue Ronsard, F-69150 Decines (FR)**
Inventeur: **Meunier, Francis, 15 Allée du Québec, F-91405 Igny (FR)**

(74) Mandataire: **Laurent, Michel et al, 20 rue Louis Chirpaz Boite Postale 32, F-69130 Lyon-Ecully (FR)**

ACTORUM AG

## Description

L'invention concerne une installation pour la production de chaleur ou de froid à partir d'une source de chaleur, par adsorption sur un adsorbant solide. Elle vise plus particulièrement un nouveau processus de réfrigération à partir d'une source d'énergie dont la gamme de température est comprise entre 100 et 300°C, telle que notamment l'énergie solaire. Elle se rapporte également à un procédé pour la mise en œuvre d'une telle installation.

Comme on le sait, il existe des techniques permettant de produire du froid à partir d'une source chaude par adsorption d'un fluide frigorigène sur un adsorbant solide (voir notamment brevets américains 1881208 et 3270512, britannique 385407 et FR-A-2377589). Sommairement, ces installations comportent essentiellement:
- un circuit chaud destiné à chauffer et à faire circuler un fluide calorigène;
- un circuit froid destiné à refroidir et à faire circuler un fluide dit de refroidissement;
- un circuit réfrigérant pour l'enceinte à climatiser;
- deux cuves contenant un composé solide ayant une grande capacité mais une faible énergie d'adsorption, ces deux cuves, reliées entre elles et aux différents circuits, comprenant:
- au moins un échangeur, dénommé «réacteur», destiné à recevoir ledit composé adsorbant et à faire réagir ce composé avec le fluide frigorigène;
- au moins un condenseur destiné à condenser le fluide frigorigène désorbé sous l'effet de l'action du fluide chaud traversant le composé adsorbant chargé de fluide frigorigène;
- au moins un évaporateur destiné à vaporiser le fluide frigorigène sur le composé adsorbant refroidi par le circuit du fluide de refroidissement.

Dans le brevet français FR-A-2465970 des Déposants, correspondant à la demande PCT-WO 81/00904 (PCT/FR 80/00139), on a suggéré avant l'inversion du cycle adsorption-désorption, c'est-à-dire lorsque chaque cuve est proche de son point d'équilibre, d'égaliser les températures entre ces deux cuves.

Ces solutions, qui présentent de nombreux avantages, nécessitent toutefois des tuyauteries et des vannes aptes à travailler sous pression de fluides frigorigènes, c'est-à-dire en dépression si ces fluides sont notamment de l'eau ou de méthanol et en surpression pour d'autres fluides tels que l'ammoniaque ce qui, pendant le cycle, engendre des pertes de charge importantes, susceptibles d'entraîner un abaissement de température que l'on estime généralement aux environs de 10°C. Par ailleurs, comme les différentes vannes connectant les tuyauteries et les circuits entre eux doivent être aptes à travailler sous cette pression de fluides frigorigènes, cela engendre d'une part des fuites et d'autre part, augmente substantiellement le coût effectif de ces installations.

L'invention pallie ces inconvénients. Elle concerne une installation du type en question à deux cuves adsorbantes qui ne nécessite pas de tuyauteries ou de vannes spéciales pour pouvoir travailler sous pression de fluides frigorigènes et qui donc de ce fait, est plus économique à la fois à construire mais également à faire fonctionner. En outre, cette installation présente un COP (coefficient de performance) amélioré.

Cette installation thermodynamique perfectionnée par adsorption d'un fluide frigorigène sur adsorbant solide, pour réfrigérer ou chauffer, du type comprenant:
- un circuit chaud destiné à chauffer et à faire circuler un fluide calorigène;
- un circuit froid destiné à refroidir et à faire circuler un fluide de refroidissement;
- un circuit réfrigérant pour l'enceinte à climatiser;
- deux cuves contenant un composé solide ayant une grande capacité mais une faible énergie d'adsorption, lesdites cuves, reliées entre elles et aux différents circuits, comprenant:
- au moins un réacteur destiné à recevoir lesdits composés adsorbants,
- au moins un condenseur destiné à condenser le fluide frigorigène désorbé sous l'effet de l'action du fluide chaud traversant le composé adsorbant chargé de fluide frigorigène,
- au moins un évaporateur destiné à vaporiser le fluide frigorigène adsorbé sur le composé adsorbant refroidi par le circuit froid,
et dans lequel:
- le circuit chaud est apte à être connecté aux réacteurs des deux cuves;
- le circuit froid est apte à être connecté soit aux condenseurs soit aux réacteurs des deux cuves;
- et enfin le circuit réfrigérant est apte à être relié aux évaporateurs des deux cuves
se caractérise en ce que chaque cuve est monobloc et est sous pression d'un fluide frigorigène, chaque cuve comprenant:
- une pluralité de tubes parallèles formant réacteurs garnis de composé absorbant;
- un organe formant à la fois évaporateur et condenseur, dénommé «évaporateur-condenseur», constitué soit de plateaux superposés, parallèles entre eux et parallèles aux tubes, soit d'un échangeur à ruissellement;
- au moins un écran anti-rayonnement disposé
- entre l'évaporateur-condenseur et les tubes réacteurs;
- des collecteurs, reliant les tubes et l'évaporateur-condenseur aux arrivées et aux départs des différents circuits.

Avantageusement, en pratique:
- la source de chauffage du circuit chaud est constitué par un capteur solaire ou par une chaudière;
- la source de froid du circuit froid est constitué par un aéroréfrigérant ou par une tour de refroidissement, liés à l'air ambiant ou par un circuit de fluide de refroidissement disponible par ailleurs;
- le circuit réfrigérant comporte soit une batterie air-eau soit tout autre échangeur thermique, notamment susceptible de produire de la glace;

– les trois circuits et les deux cuves sont reliés entre eux par des tuyauteries et des vannes traditionnelles sous pression d'eau ou d'huile thermique;

– l'adsorbant solide est choisi dans le groupe comprenant les zéolithes, les charbons actifs, les gels de silice et d'alumine activée; le fluide frigorigène est choisi dans le groupe comprenant l'eau, le méthanol et l'ammoniaque.

L'invention concerne également un procédé pour la mise en œuvre d'une telle installation.

Selon ce procédé:

– dans un premier temps, simultanément, on commute:

– le circuit chaud sur le réacteur de la première cuve pour provoquer la désoprtion du fluide frigorigène de celui-ci,

– le circuit froid sur le réacteur de la deuxième cuve pour permettre l'adsorption du fluide frigorigène sur celui-ci,

– et simultanément, on évacue la chaleur fournie par la condensation du fluide frigorigène sur l'évaporateur-condenseur de la première cuve par le circuit froid et on retire sur le circuit réfrigérant l'énergie de vaporisation du fluide frigorigène sur l'évaporateur-condenseur de la deuxième cuve;

– dans un deuxième temps, après avoir commuté ensemble les réacteurs des deux cuves, dans le but de réaliser l'équilibre thermique entre ces réacteurs, pour que le refroidissement de la première cuve qui commence à adsorber permettre le préchauffage de la deuxième cuve qui commence à désorber, on commence à évacuer la chaleur fournie par la condensation du fluide frigorigène sur l'évaporateur-condenseur de la deuxième cuve sur le circuit froid et on retire sur le circuit réfrigérant l'énergie de vaporisation du fluide frigorigène sur l'évaporateur-condenseur de la première cuve;

– puis, dans un troisième temps, tout en continuant à évacuer la chaleur fournie par la condensation du fluide frigorigène sur l'évaporateur-condenseur de la deuxième cuve sur le circuit froid et à retirer sur le circuit réfrigérant l'énergie de vaporisation du fluide frigorigène sur l'évaporateur-condenseur de la première cuve, on commute:

– le circuit chaud sur le réacteur de la deuxième cuve jusqu'à désorption de celle-ci, et

– le circuit froid sur le réacteur de la première cuve jusqu'à adsorption de celle-ci;

– dans un quatrième temps, après avoir commuté à nouveau les réacteurs des deux cuves dans le but de réaliser à nouveau l'équilibre thermique entre ces deux réacteurs pour que le refroidissement de la deuxième cuve qui commence à adsorber permette le préchauffage de la première cuve qui commence à désorber, on évacue la chaleur fournie par la condensation de fluide frigorigène sur l'évaporateur-condenseur de la première cuve par le circuit froid et on retire sur le circuit réfrigérant l'énergie de vaporisation du fluide frigorigène sur l'évaporateur-condenseur de la deuxième cuve;

– et enfin, dans un cinquième temps, on commute:

– le circuit chaud sur le réacteur de la première cuve,

– le circuit froid sur le réacteur de la première cuve,

– et on continue à évacuer la chaleur fournie par la condensation du fluide frigorigène sur l'évaporateur-condenseur de la première cuve par le circuit froid et on continue à retirer sur le circuit réfrigérant l'énergie de vaporisation du fluide frigorigène sur l'évaporateur-condenseur de la deuxième cuve.

Les différentes commutations sont assurées par un organe de régulation qui commande l'ouverture et la fermeture des différentes vannes placées sur les tuyauteries des différents circuits.

La manière dont l'invention peut être réalisée et les avantages qui en découlent ressortiront mieux de la suite de la description et des exemples de réalisation, donnés à titre indicatif et non limitatif, à l'appui des figures annexées.

Si l'exemple qui suit se réfère à une installation de réfrigération, sans sortir du cadre de l'invention, celle-ci peut être adaptée à la production de chaleur.

La figure 1 est une représentation schématique d'une installation conforme à l'invention.

Les figures 2 et 3 montrent respectivement vue en coupe et vue en section selon l'axe II–II', la cuve monobloc caractéristique de l'invention.

Les figures 4 à 7 illustrent schématiquement les principales phases de fonctionnement du procédé.

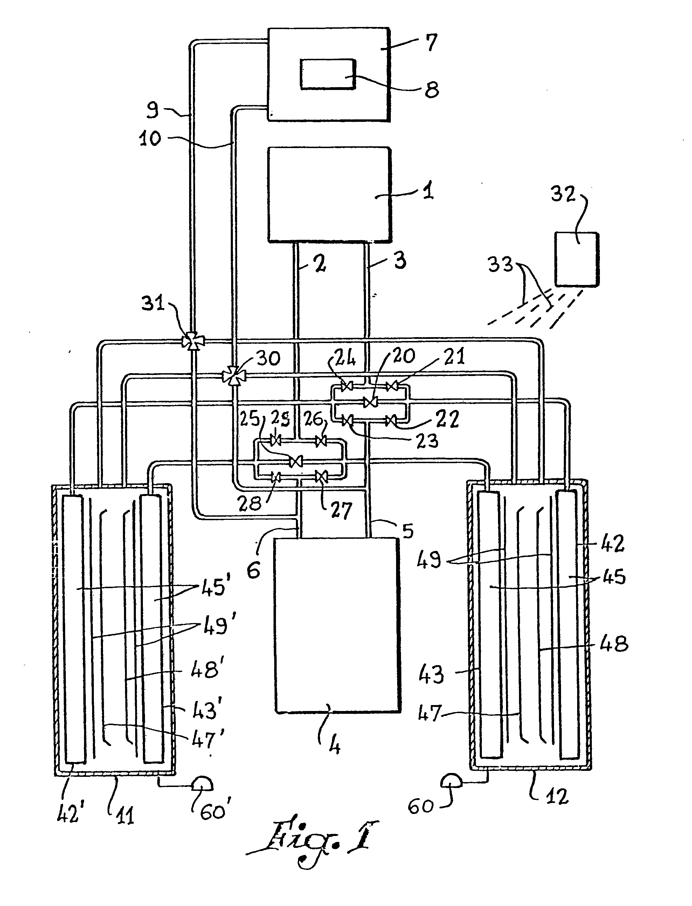

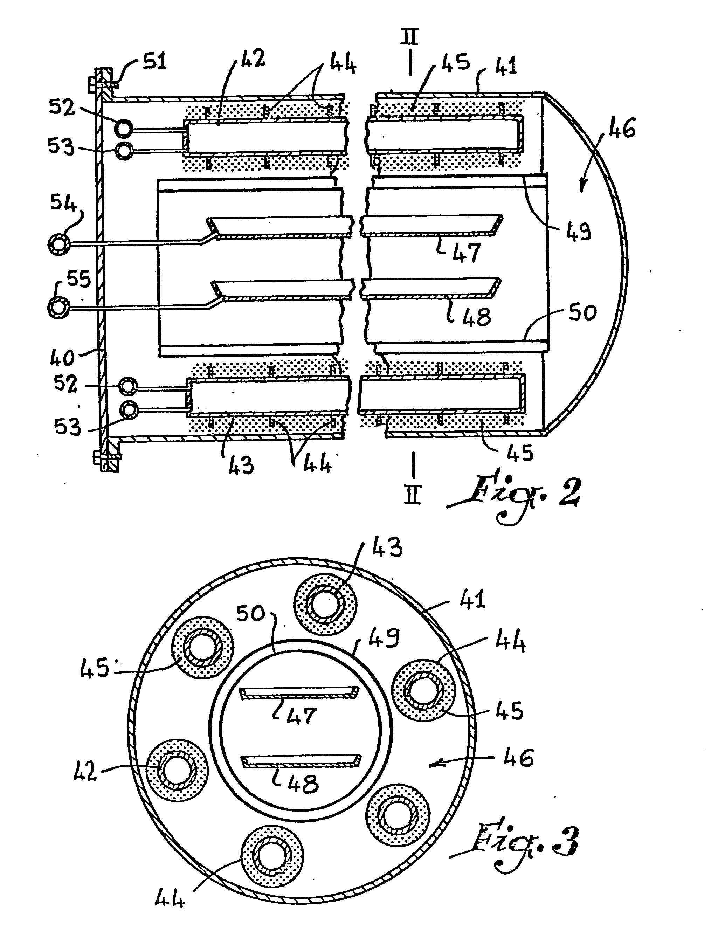

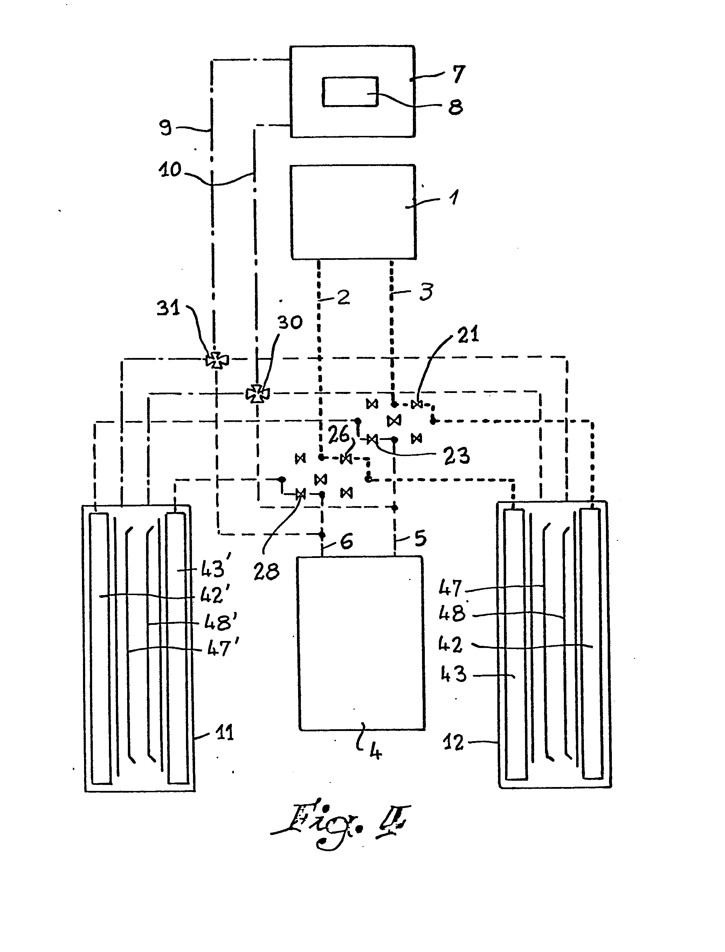

L'installation de réfrigération à adsorption sur adsorbant solide (voir figure 1) comprend:

– une source de chaleur (1), telle qu'un capteur solaire ou une chaudière, destinée à chauffer et à faire circuler un fluide calorigène, tel que de l'eau ou de l'huile, qui circule dans une tuyauterie traditionnelle départ (2) et retour (3), l'ensemble (1, 2, 3) formant ainsi le circuit chaud;

– une source froide (4), telle que par exemple une tour de refroidissement ou un aéroréfrigérant, liés à l'air ambiant, destinée à refroidir et à faire circuler un fluide de refroidissement, tel que de l'eau, dans une tuyauterie traditionnelle départ (5) et retour (6), l'ensemble (4, 5, 6) formant le circuit froid;

– un circuit réfrigérant (7), par exemple de climatisation, placé dans l'enceinte non représentée à climatiser, telle qu'un local ou une chambre froide ou même une enceinte de fabrication de glace, avec sa batterie air-eau (8) et ses tuyauteries traditionnelles de raccord départ (9) et retour (10), l'ensemble (7, 9, 10) formant le circuit de climatisation; toutes les tuyauteries (2, 3, 5, 6, 9, 10) sont des tuyauteries traditionnelles classiques en pression d'eau ou autres fluides appropriés: huiles thermiques;

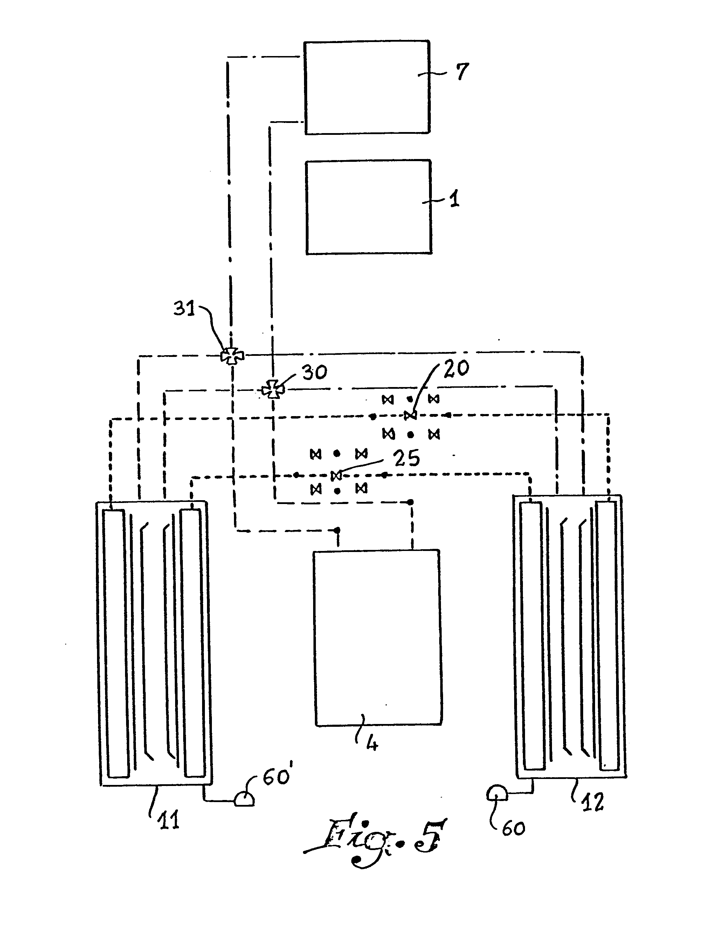

– deux cuves monobloc (11, 12) à savoir l'une dénommée première cuve (12), l'autre dénommée deuxième cuve (11) et qui sont montrées en détail aux figures 2 et 3; ces deux cuves monobloc (11, 12) sont constituées essentiellement chacune par:

– un fond (40) sur lequel débouchent les différentes tuyauteries départ et retour énumérés ci-desus,

– une cuve proprement dite (41), de forme générale cylindrique horizontale, par exemple en acier inoxydable, raccordée au fond (40) par des brides (51),

– une pluralité, par exemple au nombre de six, de tubes (42, 43) munis d'ailettes radiales parallèles (44) remplies d'un composé adsorbant (45) solide ayant une grande capacité d'adsorption et une faible énergie d'adsorption, telle que par exemple une zéolithe type 13 X; ces tubes (42, 43) qui forment le réacteur sont disposés sur un cercle en périphérie intérieure de la cuve (41), laquelle est d'ailleurs remplie de vapeur d'eau (46) sous vide,

– deux plateaux (47, 48) parallèles entre eux et également parallèles aux tubes (42, 43) qui forment évaporateur-condenseur; comme déjà dit, ces plateaux (47, 48) peuvent être remplacés par un échangeur à ruissellement, tel qu'un faisceau de tubes à ailettes sur lequel on fait ruisseler le fluide frigorigène en circuit fermé dans la cuve;

– deux écrans (49, 50) cylindriques coaxiaux à la cuve (40) et qui enferment les plateaux (47, 48); ces deux écrans (49, 50) anti-rayonnement peuvent être par exemple en tôle d'aluminium polie et sont destinés à éviter l'échange thermique entre les plateaux (47, 48) et les tubes réacteurs (42, 43),

– un premier collecteur torique (52), reliant les différentes arrivées des réacteurs (42, 43), et un second collecteur également torique (53) reliant les départs de ce même réacteur (42, 43),

– deux collecteurs droits (54, 55) extérieurs à la cuve (40) reliant les plateaux (47, 48) aux différentes arrivées ou départs des différents circuits;

– une pluralité de vannes (20) à (31) placée sur les tuyauteries (2, 3, 5, 6, 9, 10) essentiellement de deux types:

– soit des vannes simples traditionnelles, c'est-à-dire à deux voies (20) à (29) aptes à travailler sous pression d'eau ou autres fluides,

– soit des vannes classiques multiples à quatre voies (30, 31);

– un organe classique de régulation (32), relié par des connections (33) aux différentes vannes (20) à (31), et ce afin de commander l'ouverture et la fermeture de ces vannes.

Sur les figures, la référence prime (') symbolise la deuxième cuve (11).

Le fonctionnement de l'installation est le suivant:

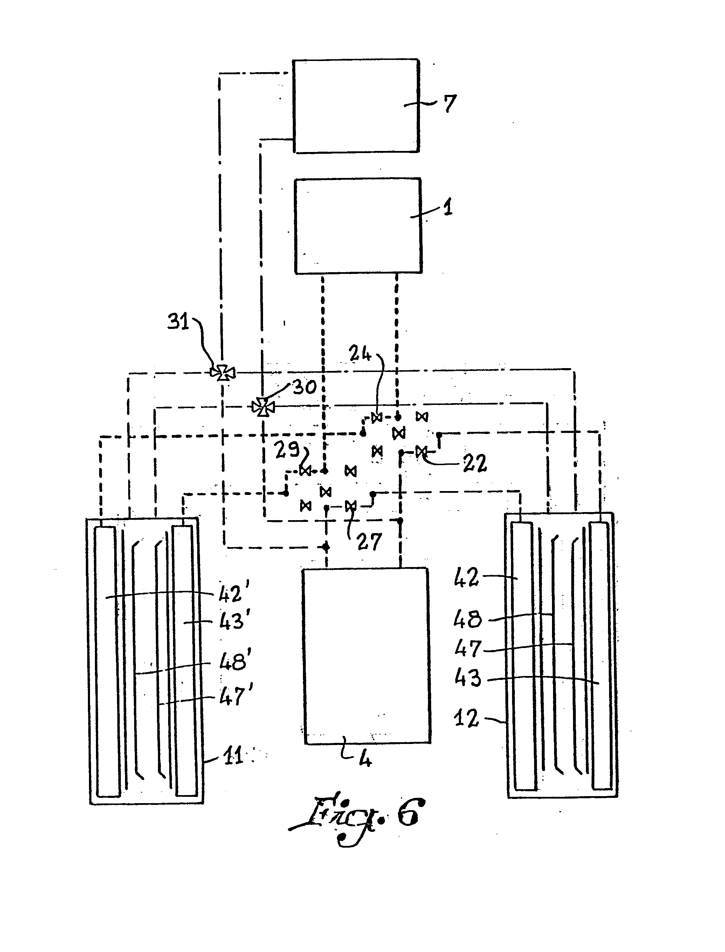

Première phase:
désorption en (12), adsorption en (11) (figure 4):

Au départ, la source chaude (1) est commutée par les tuyauteries (2, 3) (circuit en pointillés) sur les tubes (42, 43) de la première cuve (12). Ainsi, on envoie le fluide calorigène (eau chaude) issu de la source (1) sur les tubes (42, 43) du réacteur.

Ainsi, on désorbe la zéolithe contenue entre les ailettes (44). De la sorte, le fluide frigorigène condense sur l'évaporateur-condenseur (47, 48) de la première cuve (12).

La chaleur récupérée sur ces plateaux est ensuite évacuée à la source froide (4) par le circuit représenté en tirets, grâce à la permutation des vannes (30, 31). Simultanément, la source froide (4) est commutée par le circuit en tirets aux réacteurs (42') de la deuxième cuve (11). Ainsi la zéolithe contenue sur ces tubes (42') adsorbe de la vapeur d'eau provenant de l'évaporateur-condenseur à plateaux (47', 48') de cette deuxième cuve (11). La chaleur de vaporisation nécessaire est ensuite retirée au circuit de climatisation (7) par les tuyauteries (9, 10) et par les vannes (30, 31) (circuit représenté en tirets et pointillés), afin de refroidir la batterie à eau (8) de ce circuit de climatisation (7).

Pendant toute cette première phase, les vannes (21, 23, 26, 28) sont ouvertes, alors que les vannes (20, 22, 24, 25, 27, 29) sont fermées.

Les vannes à quatre voies (30, 31) agissent ainsi dans les deux sens.

Deuxième phase:
échange interne (figure 5):

Lorsque par exemple, à l'aide d'un capteur de pression (60) ou de température, on détecte la fin de l'adsorption ou de la désorption dans les deux cuves (11, 12), on cherche alors à récupérer la chaleur interne de ces deux cuves (11, 12).

Pour ce faire, en appliquant les enseignements de la demande de brevet français FR-A-2 465 970 des Déposants, on commute ensemble les réacteurs (42, 43, 42', 43') à zéolithe des deux cuves (11, 12) (circuits représentés en pointillés) grâce aux vannes (20, 25). Ainsi, l'eau circule entre les deux cuves (11, 12) de sorte que le refroidissement de la première cuve (12) qui commence à adsorber permet le préchauffage de la deuxième cuve (11) qui commence à désorber. Cela améliore le rendement.

Simultanément, les vannes (30) et (31) sont ouvertes de manière à assurer:

– d'une part, la connection entre le circuit de climatisation (7) et l'évaporateur-condenseur (47, 48) de la première cuve (12) (circuit en tirets-pointillés);

– d'autre part, la connection entre le circuit froid (4) et l'évaporateur-condenseur (47', 48') de la deuxième cuve (11) (circuit en tirets).

Lorsque l'on a atteint l'équilibre thermique entre les deux réacteurs, on arrête l'échange entre ces deux réacteurs en fermant les vannes (20) et (25).

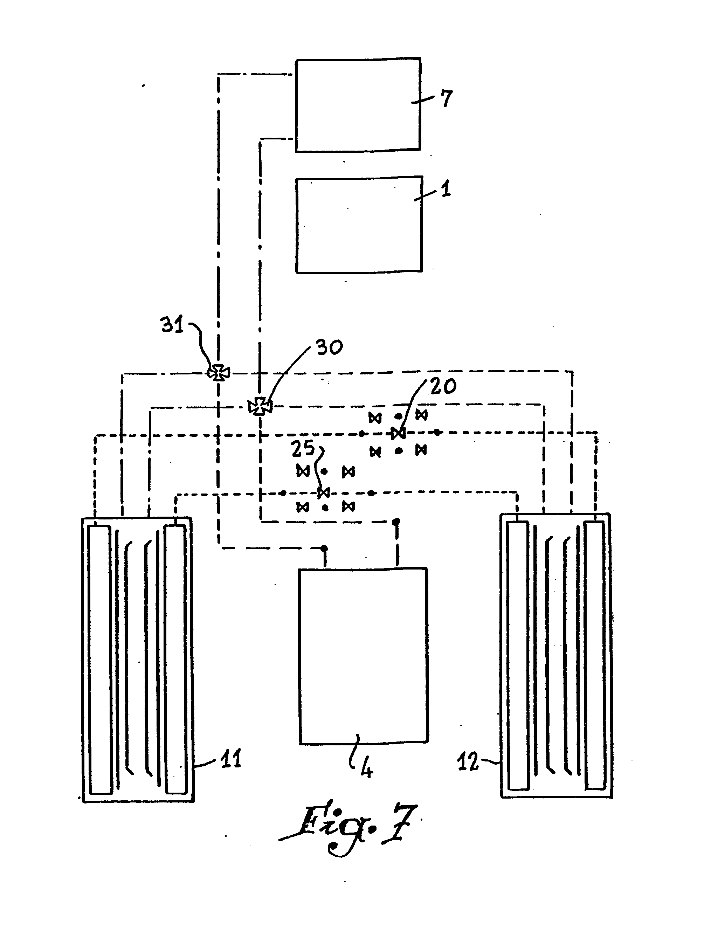

Troisième phase:
désorption sur (11), adsorption sur (12) (figure 6):

Ici, la source chaude (1) est commutée sur le réacteur (42', 43') de la deuxième cuve (11) en ouvrant les vannes (24) et (29) (circuit en pointillés). Ainsi, comme prédécemment mais à l'inverse, on continue à désorber la zéolithe. De la sorte, le fluide frigorigène se condense sur l'évaporateur-condenseur (47', 48') contenu dans vette deuxième cuve (11) et on continue à évacuer la chaleur fournie par l'évaporateur-condenseur de cette cuve (11) vers la source froide (4) (circuit en tirets) en ouvrant les vannes (30) et (31).

Simultanément, en ouvrant les vannes (22) et (27), la source froide (4) est commutée sur les réacteurs (42, 43) de la première cuve (12) (circuit en tirets) qui continue à adsorber ainsi de la vapeur d'eau provenant de l'évaporateur-condenseur de cette cuve (12). On continue à retirer sur le circuit de climatisation (7) grâce aux vannes (30) et (31) (circuit en pointillés et en tirets). L'énergie de vaporisation du fluide frigorigène sur l'évaporateur-condenseur (47, 48) de la première cuve (12).

Comme précédemment, on détecte la fin de cette troisième phase.

Pendant cette phase, seules les vannes (22, 24, 27, 29) sont ouvertes, les vannes (30) et (31) à quatre voies jouant dans les deux sens.

Quatrième phase:
échange interne (figure 7):

Comme à la phase deux, on réalise l'échange interne entre les deux cuves (11) et (12). Ainsi, le refroidissement de la deuxième cuve (11) qui commence à absorber permet le préchauffage de la première cuve (12) qui commence à désorber.

Simultanément, les vannes (30) et (31) sont ouvertes de manière à assurer:
— d'une part, la connection entre le circuit de climatisation (7) et l'évaporateur-condenseur (47', 48') de la deuxième cuve (11) (circuit en tirets et pointillés);
— d'aute part, la connection entre le circuit froid (4) et l'évaporateur-condenseur (47, 48) de la première cuve (12) (circuit en tirets).

Cinquième phase:
désorption en (12), adsorption en (11) (figure 4):

Lorsque l'on a atteint l'équilibre thermique entre les réacteurs des deux cuves (11) et (12), on commute:
— le circuit chaud (1) sur le réacteur (42, 43) de la première cuve (12);
— le circuit froid (4) sur le réacteur (42', 43') de la deuxième cuve (11);
— et on continue à évacuer la chaleur fournie par la condensation du fluide frigorigène sur l'évaporateur-condenseur (47, 48) de la première cuve (12) par le circuit froid (4) et on continue à retirer sur le circuit de climatisation (7) l'énergie de vaporisation du fluide frigorigène sur l'évaporateur-condenseur (47', 48') de la deuxième cuve (11).

Bref, cela revient, du moins au niveau des circuits à reproduire à nouveau la phase un.

Puis le cycle recommence.

Pendant toutes ces phases (figures 4 à 7), les mouvements d'ouverture et de fermeture des différentes vannes sont assurés par un organe de régulation (32) classique lié par des connections (33) à chaque vanne concernée.

En fait, cette régulation (32) commande essentiellement trois groupes de vannes, à savoir respectivement:
— les vannes (20) et (25) en opposition avec toutes les autres vannes deux voies à savoir (21, 22, 23, 24, 26, 27, 28, 29);
— les vannes (21, 23, 26, 28) en opposition avec les vannes (22, 24, 27, 29);

— les vannes quatre voies (30, 31) commandées par (32).

Sur ces figures 4 à 7, les circuits en pointillés représentent les phases de désorption et les phases de récupération de la chaleur, alors que les circuits en tirets représentent les phases d'adsorption et de condensation et enfin les circuits représentés en tirets et en pointillés illustrent les phases d'évaporation.

L'installation selon l'invention présente de nombreux avantages par rapport à ce qui était connu à ce jour. On peut citer:
— la production semi-continue de froid;
— l'absence d'éléments mobiles dans les parties sensibles, c'est-à-dire dans les cuves (11, 12);
— le fait qu'il n'est pas utile de faire appel à des tuyauteries ou des vannes spéciales notamment à des vannes ou des tuyauteries aptes à travailler sous pression de fluides frigorigènes; de la sorte, on peut utiliser des tuyauteries ou des vannes traditionnelles, ce qui simplifie les problèmes d'étanchéité;
— le fait d'obtenir que les phases d'équilibre deux et quatre permettent d'obtenir des COP améliorés;
— la possibilité d'utiliser des cuves hermétiques grâce à la structure monobloc.

De la sorte, ces installations peuvent servir avec succès:
— pour la climatisation de locaux à partir d'une source chaude, telle que par exemple un capteur solaire;
— pour la conversation d'aliments dans les pays chauds;
— comme pompe à chaleur (production de chaleur), en utilisant l'énergie fournie en adsorption et en condensation: en récupérant toute l'énergie fournie à la source froide, on peut ainsi chauffer des locaux, notamment en retirant sur l'air ambiant l'énergie de vaporisation;
— en outre, en remplaçant la zéolithe par du charbon actif comme corps adsorbant et l'eau du circuit par du méthanol, on peut même envisager la fabrication de glace ou la conservation à basse température.

**Revendications**

1. Installation thermodynamique par adsorption d'un fluide frigorigène sur un adsorbant solide, pour réfrigérer ou chauffer du type comprenant:
— un circuit chaud (1, 2, 3) destiné à chauffer et à faire circuler un fluide calorigène;
— un circuit froid (4, 5, 6) destiné à refroidir et à faire circuler un fluide dit de refroidissement;
— un circuit réfrigérant (7, 8, 9, 10) pour l'enceinte à climatiser;
— deux cuves (11, 12) contenant un composé solide (45) ayant une grande capacité et une faible énergie d'adsorption, lesdites cuves (11, 12), reliées entre elles et aux différents circuits, comprenant:
— au moins un réacteur (42, 43, 42', 43') destiné à recevoir ledit composé adsorbant (45);

– au moins un condenseur destiné à condenser le fluide frigorigène désorbé sous l'effet de l'action du fluide chaud traversant le composé adsorbant (45) chargé de fluide frigorigène;

– au moins un évaporateur destiné à vaporiser le fluide frigorigène adsorbé sur le composé adsorbant refroidi par le circuit froid, et dans lequel:

– le circuit chaud (1, 2, 3) est apte à être connecté aux réacteurs (42, 43, 42', 43') des deux cuves (11, 12);

– le circuit froid (4, 5, 6) est apte à être connecté soit aux condenseurs (47, 48, 47', 48'), soit aux réacteurs (42, 43, 42', 43') des deux cuves (11, 12);

– et enfin, le circuit réfrigérant (7) est apte à être relié aux évaporateurs (47, 48, 47', 48') des deux cuves (11, 12); caractérisé e en ce que chaque cuve (11, 12) est monobloc (41) et est sous pression d'un fluide frigorigène, chaque cuve comprenant:

– une pluralité de tubes parallèles (42, 43) formant réacteurs, garnis de composé adsorbant (45);

– un organe formant à la fois évaporateur et condenseur constitué soit de plateaux (47, 48, 47', 48') superposés, parallèles entre eux et parallèles aux tubes (42, 43, 42', 43'), soit d'un échangeur à ruissellement;

– au moins un écran anti-rayonnement (49, 50) disposé entre l'évaporateur-condenseur (47, 48, 47', 48') et les tubes réacteurs (42, 43, 42', 43');

– des collecteurs (52, 53, 54, 55) reliant les tubes réacteurs (42, 43, 42', 43') et l'évaporateur-condenseur (47, 48, 47', 48') aux arrivées et aux départs des différents circuits (1, 4, 7).

2. Installation selon la revendication 1, caractérisée en ce que les cuves (11, 12) sont cylindriques et en ce que les tubes parallèles (42, 43) formant réacteurs comportent des ailettes (44) et sont disposés à l'intérieur et en périphérie de cette cuve (11, 12), alors que l'évaporateur-condenseur (47, 48, 47', 48') est disposé au centre.

3. Installation selon la revendication 1, caractérisée en ce que la source de chauffage du circuit chaud (1) est constituée par un capteur solaire ou par une chaudière.

4. Installation selon la revendication 1, caractérisée en ce que la source de froid (4) du circuit froid est constituée par un aéroréfrigérant ou une tour de refroidissement liés à l'air ambiant ou par un circuit de fluide de refroidissement disponible par ailleurs.

5. Installation selon la revendication 1, caractérisée en ce que le circuit réfrigérant (7) comporte une batterie air-eau (8) ou un échangeur thermique produisant de la glace.

6. Installation selon l'une des revendications 1 à 5, caractérisée en ce que les trois circuits (1, 4, 7) et les deux cuves (11, 12) sont reliés entre eux par des tuyauteries (2, 3, 5, 6, 9, 10) et par des vannes (20) à (31) traditionnelles sous pression d'eau ou d'huile thermique.

7. Installation selon revendication 1, caractérisée en ce que l'adsorption solide est choisi dans le groupe comprenant les zéolithes, les charbons actifs, les gels de silice et l'alumine activée, et en ce que le fluide frigorigène est choisi dans le groupe comprenant l'eau, le méthanol et l'ammoniaque.

8. Procédé pour la mise en œuvre d'une installation thermodynamique selon l'une des revendications 1 à 7, caractérisé en ce que:

– dans un premier temps, simultanément, on commute:

– le circuit chaud (1) sur le réacteur (42, 43) pour provoquer la désorption du fluide frigorigène de celui-ci,

– le circuit froid (4) sur le réacteur (42', 43') de la deuxième cuve (11) pour permettre l'adsorption du fluide frigorigène sur celui-ci,

– et simultanément, on évacue la chaleur fournie par la condensation du fluide frigorigène sur l'évaporateur-condenseur (47, 48) de la première cuve par le circuit froid (4) et on retire sur le circuit réfrigérant (7) l'énergie de vaporisation du fluide frigorigène sur l'évaporateur-condenseur (47', 48') de la deuxième cuve (11);

– dans un deuxième temps, on commute ensemble les réacteurs (42, 43, 42', 43') des deux cuves (11, 12) dans le but de réaliser l'équilibre thermique entre ces réacteurs, pour que le refroidissement de la première cuve (12) qui commence à adsorber permette le préchauffage de la deuxième cuve (11) qui commence à désorber et on commence à évacuer la chaleur fournie par la condensation du fluide frigorigène sur l'évaporateur-condenseur (47', 48') de la deuxième cuve (11) sur le circuit froid (4) et on retire sur le circuit réfrigérant (7) l'énergie de vaporisation du fluide frigorigène sur l'évaporateur-condenseur (47, 48) de la première cuve (12);

– puis, dans un troisième temps, tout en continuant à évacuer la chaleur fournie par la condensation du fluide frigorigène sur l'évaporateur-condenseur (47', 48') de la deuxième cuve (11) sur le circuit froid (4) et à retirer sur le circuit réfrigérant (7) l'énergie de vaporisation du fluide frigorigène sur l'évaporateur-condenseur (47, 48) de la première cuve (12), on commute:

– le circuit chaud (1) sur le réacteur (42', 43') de la deuxième cuve (11) jusqu'à désorption de celle-ci, et

– le circuit froid (4) sur le réacteur (42, 43) de la première cuve (12) jusqu'à adsorption de celle-ci;

– puis, dans un quatrième temps, après avoir commuté à nouveau les réacteurs (42, 43, 42', 43'), des deux cuves (11, 12) dans le but de réaliser à nouveau l'équilibre thermique entre ces réacteurs (42, 43, 42', 43') pour que le refroidissement de la deuxième cuve (11) qui commence à adsorber permette le préchauffage de la première cuve (12) qui commence à désorber, on évacue la chaleur fournie par la condensation du fluide frigorigène sur l'évaporateur-condenseur (47, 48) de la première cuve (11) par le circuit froid (4) et on retire sur le circuit réfrigérant (7) l'énergie de vaporisation du fluide frigorigène sur l'évaporateur-condenseur (47', 48') de la deuxième cuve (11);

– et enfin dans un cinquième temps, on commute:

– le circuit chaud (1) sur le réacteur (42, 43) de la première cuve (12),

– le circuit froid (4) sur le réacteur (42′, 43′) de la deuxième cuve (11),

– et on continue à évacuer la chaleur fournie par la condensation du fluide frigorigène sur l'évaporateur-condenseur (47, 48) de la première cuve (11) par le circuit froid (4) et on continue à retirer sur le circuit réfrigérant (7) l'énergie de vaporisation du fluide frigorigène sur l'évaporateur-condenseur (47′, 48′) de la deuxième cuve (11).

9. Procédé selon revendication 8, caractérisé en ce que les différentes commutations sont assurées par un organe de régulation (32) qui commande l'ouverture et la fermeture des différentes vannes (20–31) placées sur les tuyauteries (2, 3, 5, 6, 9, 10) des différents circuits (1, 4, 7).

**Patentansprüche**

1. Thermodynamische Anlage zur Kühlung oder Heizung durch Adsorption eines Kältemittels an einem festen Adsorbens mit:

– einem warmen Kreislauf (1, 2, 3) zum Heizen und In-Umlauf-bringen eines Wärmemittels;

– einem kalten Kreislauf (4, 5, 6) zum Kühlen und In-Umlauf-bringen eines Kühlmittel genannten Fluids;

– einem Kühlkreislauf (7, 8, 9, 10) für einen zu klimatisierenden abgeschlossenen Raum;

– zwei Behältern (11, 12), die einen festen Stoff (45) mit grosser Adsorptionskapazität und geringer Adsorptionsenergie enthalten, die miteinander und mit den verschiedenen Kreisläufen verbunden sind und jeweils:

– wenigstens einen Reaktor (42, 43, 42′, 43′), der zur Aufnahme des genannten Adsorbens (45) bestimmt ist,

– wenigstens einen Kondensator zum Kondensieren des Kältemittels, das unter der Wirkung des warmen Fluids, das das mit dem Kältemittel beladene Adsorbens (45) durchströmt, desorbiert wird und

– wenigstens einen Verdampfer zum Verdampen des Kältemittels, das sich an das durch den kalten Kreislauf gekühlte Adsorbens angelagert hat, umfasst; und in welcher Anlage:

– der warme Kreislauf (1, 2, 3) mit den Reaktoren (42, 43, 42′, 43′) der beiden Behälter (11, 12);

– der kalte Kreislauf (4, 5, 6) wahlweise entweder mit den Kondensatoren (47, 48, 47′, 48′) oder mit den Reaktoren (42, 43, 42′, 43′) der beiden Behälter (11, 12);

– und schliesslich der Kühlkreislauf (7) mit den Verdampfern (47, 48, 47′, 48′) der beiden Behälter (11, 12), verbindbar ist; dadurch gekennzeichnet, dass jeder Behälter (11, 12) eine unter dem Druck eines Kältemittels stehende Baueinheit (41) bildet, enthaltend:

– eine Vielzahl von parallel angeordneten Rohren (42, 43), die die Reaktoren bilden und mit dem Adsorbens (45) versehen sind;

– eine Einrichtung, die zugleich Verdampfer und Kondensator bildet und sich entweder aus zueinander und zu den Rohren (42, 43, 42′, 43′) parallelen, übereinander angeordneten Platten (47, 48, 47′, 48′) zusammensetzt oder die aus einem Rieselaustauscher besteht;

– wenigstens eine strahlungsabweisende Abschirmung (49, 50), die zwischen dem Verdampfer/Kondensator (47, 48, 47′, 48′) und den Reaktorrohren (42, 43, 42′, 43′) angeordnet ist; und

– Sammelrohre (52, 53, 54, 55), die die Reaktorrohre (42, 43, 42′, 43′) und den Verdampfer/Kondensator (47, 48, 47′, 48′) an den Zu- und Abläufen der verschiedenen Kreisläufe (1, 4, 7) miteinander verbinden.

2. Anlage nach Anspruch 1, dadurch gekennzeichnet, dass die Behälter (11, 12) zylindrisch sind und dass die parallelen Rohre (42, 43), die die Reaktoren bilden, Rippen (44) aufweisen und innerhalb des Behälters (11, 12) nahe dessen Umfang angeordnet sind, während der Verdampfer/Kondensator (47, 48, 47′, 48′) in der Mitte des Behälters angeordnet ist.

3. Anlage nach Anspruch 1, dadurch gekennzeichnet, dass die Heizungsquelle für den warmen Kreislauf (1) aus einem Solarkollektor oder aus einem Heizkessel besteht.

4. Anlage nach Anspruch 1, dadurch gekennzeichnet, dass die Kältequelle (4) des kalten Kreislaufs aus einem Luftkühler oder einem Kühlturm besteht, der mit der Umgebungsluft oder mit dem Kreislauf eines andersseitig verfügbaren Kühlmittels in Verbindung steht.

5. Anlage nach Anspruch 1, dadurch gekennzeichnet, dass der Kühlkreislauf (7) eine Luft-Wasser-Batterie (8) oder einen Wärmeaustauscher für die Eisherstellung aufweist.

6. Anlage nach einem der Ansprüche 1 bis 5, dadurch gekennzeichnet, dass die drei Kreisläufe (1, 4, 7) und die beiden Behälter (11, 12) durch herkömmliche, Druckwasser oder Wärmeöl führende Rohrleitungen (2, 3, 5, 6, 9, 10) und Ventile (20–31) miteinander verbunden sind.

7. Anlage nach Anspruch 1, dadurch gekennzeichnet, dass das Adsorbens aus der Zeolithe, Aktivkohle und aktivierte Silica- und Aluminiumoxidgele umfassenden Stoffgruppe und das Kältemittel aus der Wasser, Methanol und Ammoniak umfassenden Stoffgruppe ausgewählt ist.

8. Prozess zum Betreiben einer thermodynamischen Anlage nach einem der Ansprüche 1 bis 7, dadurch gekennzeichnet,

– dass man zu einem ersten Zeitpunkt gleichzeitig

– den warmen Kreislauf (1) mit dem Reaktor (42, 43) verbindet, um die Desorption des Kältemittels in dem Reaktor auszulösen,

– den kalten Kreislauf (4) mit dem Reaktor (42′, 43′) des zweiten Behälters (11) verbindet, um die Adsorption des Kältemittels durch diesen Reaktor auszulösen,

– so dass über den kalten Kreislauf (4) die durch die Kondensation des Kältemittels am Verdampfer/Kondensator (47, 48) des ersten Behälters (12) entstehende Wärme abgeführt und weiterhin dem Kühlkreislauf (7) über den Verdampfer/Kondensator (47', 48') des zweiten Behälters (11) die Energie für die Verdampfung des Kältemittels entzogen wird;

– zu einem zweiten Zeitpunkt die Reaktoren (42, 43, 42', 43') der beiden Behälter (11, 12) zusammenschaltet, um ein thermodynamisches Gleichgewicht zwischen diesen Reaktoren herzustellen, damit die Abkühlung, mit der die Adsorption im ersten Behälter (12) beginnt, das Vorwärmen des zweiten Behälters (11), mit dem die Desorption beginnt, zulässt, und das Abführen der durch die Kondensation des Kältemittels am Verdampfer/ Kondensator (47', 48') des zweiten Behälters (11) entstehende Wärme mittels des kalten Kreislaufs (4) eingeleitet und weiterhin dem Kühlkreislauf (7) die Energie für die am Verdampfer/Kondensator (47, 48) des ersten Behälters (12) stattfindende Verdampfung des Kältemittels entzogen wird;

– danach, zu einem dritten Zeitpunkt, während noch immer durch die Kondensation des Kältemittels am Verdampfer/Kondensator (47', 48') des zweiten Behälters (11) entstehende Wärme durch den kalten Kreislauf (4) abgeführt und dem Kühlkreislauf (7) die Energie zur Verdampfung des Kältemittels am Verdampfer/Kondensator (47, 48) des ersten Behälters (12) entzogen wird,

– den warmen Kreislauf (1) auf den Reaktor (42', 43') des zweiten Behälters (11) schaltet, bis dort eine Desorption eintritt und

– den kalten Kreislauf (4) auf den Reaktor (42, 43) des ersten Behälters (12) schaltet, bis dort eine Adsorption eintritt;

– danach, zu einem vierten Zeitpunkt, nachdem man erneut die Reaktoren (42, 43, 42', 43') der beiden Behälter (11, 12) miteinander verbunden hat, um ein thermodynamisches Gleichgewicht zwischen diesen Reaktoren (42, 43, 42', 43') herzustellen, damit die Abkühlung des zweiten Behälters (11), in dem Adsorption einsetzt, das Vorwärmen des ersten Behälters (12) gestattet, in dem die Desorption beginnt, die durch die Kondensation des Kältemittels am Verdampfer/Kondensator (47, 48) des ersten Behälters (12) entstehende Wärme mittels des kalten Kreislaufes (4) abführt und weiterhin dem Kühlkreislauf (7) die Energie für die Verdampfung des Kältemittels am Verdampfer/Kondensator (47', 48') des zweiten Behälters (11) entzieht;

– und schliesslich, zu einem fünften Zeitpunkt,

– den warmen Kreislauf (1) mit dem Reaktor (42, 43) des ersten Behälters (12) und

– den kalten Kreislauf (4) mit dem Reaktor (42', 43') des zweiten Behälters (11) verbindet und

– weiterhin damit fortfährt, die durch die Kondensation des Kältemittels am Verdampfer/Kondensator (47, 48) des ersten Behälters (12) entstehende Wärme mittels des kalten Kreislaufs (4) abzuführen und die Energie, die notwendig ist, um das Kältemittel am Verdampfer/Kondensator (47', 48') des zweiten Behälters (11) zu verdampfen, dem Kühlkreislauf (7) zu entziehen.

9. Verfahren nach Anspruch 8, dadurch gekennzeichnet, dass die verschiedenen Verbindungen durch eine Steuereinrichtung (32) hergestellt werden, die das Öffnen und Schliessen der verschiedenen Ventile (20–31) bewirkt, die sich in den Rohrleitungen (2, 3, 5, 6, 9, 10) der verschiedenen Kreisläufe (1, 4, 7) befinden.

**Claims**

1. Thermodynamic installation for cooling or heating by adsorption on a solid adsorbent of a refrigerating fluid, of the type comprising:
– a hot circuit (1, 2, 3) adapted to heat and circulate a heating fluid;
– a cold circuit (4, 5, 6) adapted to cool and circulate a so-called cooling fluid;
– a cooling circuit (7, 8, 9, 10) for the enclosure to be air-conditioned;
– two tanks (11, 12) containing a solid compound (45) having a large capacity but a low energy of adsorption, said tanks, connected together and to the different circuits, comprising:
– at least one reactor (42, 43, 42', 43') adapted to receive said adsorbent compound (45);
– at least one condenser adapted to codense the refrigerating fluid desorbed under the effect of the action of the hot fluid passing through the adsorbent compound (45) laden with refrigerating fluid;
– at least one evaporator adapted to vaporize the refrigerating fluid adsorbed on the adsorbent compound (45) cooled by the cold circuit;
and in which:
– the hot circuit (1, 2, 3) is adapted to be connected to the reactors (42, 43, 42', 43') of the two tanks (11, 12);
– the cold circuit (4, 5, 6) is adapted to be connected either to the condensers (47, 48, 47', 48') or to the reactors (42, 43, 42', 43') of the two tanks (11, 12);
– and finally, the cooling circuit (7) is adapted to be connected to the evaporators (47, 48, 47', 48') of the two tanks (11, 12);
wherein each tank (11, 12) is a one-piece tank (41), under refrigerating fluid pressure, comprising:
– a plurality of parallel tubes (42, 43), forming reactors, padded with adsorbent compounds (45);
– a member forming both evaporator and condenser, constituted either by superposed plates (47, 48, 47', 48'), parallel to one another and parallel to the tubes (42, 43, 42', 43'), or by a trickling exchanger;
– at least one anti-radiation screen (49, 50) disposed between the evaporator-condenser (47, 48, 47', 48') and the reactor tubes (42, 43, 42', 43');
– manifolds (52, 53, 54, 55) connecting the reactor tubes (42, 43, 42', 43') and the evaporator-condenser (47, 48, 47', 48') to the inlets and cutlets of the different circuits (1, 4, 7).

2. The installation of claim 1, wherein the tanks (11, 12) are cylindrical and the parallel tubes (42, 43) forming reactors, are presenting blades (44), and are disposed on the periphery inside the tank (11, 12), whereas the evaporator-condenser (47, 48, 47', 48') is disposed at the center.

3. The installation of claim 1, wherein the source of heat of the hot circuit (1) is constituted by a solar collector or by a boiler.

a

4. The installation of claim 1, wherein the source of cold circuit (4) is constituted by an air coolant or a cooling tower connected to the ambient air or by an available cooling fluid circuit.

5. The installation of claim 1, wherein the cooling circuit (7) comprises an air-water battery (8) or a heat exchanger producing ice.

6. The installation of one of claims 1 to 5, wherein the three circuits (1, 4, 7) and the two tanks (11, 12) are connected together by conventional pipes (2, 3, 5, 6, 9, 10) and valves (20–31) under water or thermal oil pressure.

7. The installation of claim 1, wherein the solid adsorbent is selected from the group including zeolites, activated charcoals, gels of silica and activated alumina, and the refrigerating fluid is selected from the group including water, methanol and ammonia.

8. A process for implementing the thermodynamic installation of one of claims 1 to 7, wherein it comprises the following steps:

– in a first stage, simultaneously, of switching:

– the hot circuit (1) on the reactor (42, 43) to provoke desorption of the heating fluid thereof;

– the cold circuit (4) on the reactor (42', 43') of the second tank (11) to allow adsorption of the refrigerating fluid thereon;

– and simultaneously, evacuating the heat furnished by the condensation of the refrigerating fluid on the evaporator-condenser (47, 48) of the first tank by the cold circuit (4) and taking from the cooling circuit (7) the energy of vaporization of the refrigerating fluid on the evaporator-condenser (47', 48') of the second tank (11);

– in a second stage, switching together the reactors (42, 43, 42', 43') of the two tanks (11, 12), with the view to effecting thermal equilibrium between these reactors, for the cooling of the first tank (12) which begins to adsorb, to allow pre-heating of the second tank (11), which begins to desorb, whilst continuing to evacuate the heat furnished by the condensation of the refrigerating fluid on the evaporator-condenser (47', 48') of the second tank (11) on the cold circuit (4) and continuing to take from the cooling circuit (7) the energy of vaporization of the refrigerating fluid on the evaporator-condenser (47, 48) of the first tank (12);

– then, in a third stage, whilst continuing to evacuate the heat furnished by the condensation of the refrigerating fluid on the evaporator-condenser (47', 48') of the second tank (11) on the cold circuit (4) and to take from the cooling circuit (7) the energy of vaporization of the refrigerating fluid on the evaporator-condenser (47, 48) of the first tank (12), switching:

– the hot circuit (1) on the reactor (42', 43') of the second tank (11) up to desorption of latter,

– the cold circuit (4) on the reactor (42, 43) of the first tank (12) up to adsorption of the latter;

– then, in a fourth stage, after having switched the reactors (42, 43, 42', 43') of the two tanks (11, 12) again, with a view to effecting thermal equilibrium between these reactors again, for the cooling of the second tank (11), which begins to adsorb, to allow pre-heating of the first tank (12), which begins to desorb, continuing to evacuate the heat furnished by the condensation of the refrigerating fluid on the evaporator-condenser (47, 48) of the first tank (11) by the cold circuit (4) and continuing to take from the cooling circuit (7) the energy of vaporization of the refrigerating fluid on the evaporator-condenser (47', 48') of the second tank (11);

– and finally, in a fifth stage, switching:

– the hot circuit (1) on the reactor (42, 43) of the first tank (12),

– the cold circuit (4) on the reactor (42', 43') of the second tank (11),

– and continuing to evacuate the heat furnished by the condensation of the refrigerating fluid on the evaporator-condenser (47, 48) of the first tank (11) by the cold circuit (4) and continuing to take from the cooling circuit (7) the energy of vaporization of the refrigerating fluid on the evaporator-condenser (47', 48') of the second tank (11).

9. The process of claim 8, wherein the different switchings are ensured by a regulating member (32) which controls the opening and closure of the different valves (20–31) placed in the pipes (2, 3, 5, 6, 9, 10) of the different circuits (1, 4, 7).

*Fig. 1*

0124455

Fig. 2

Fig. 3

13

Fig. 4

Fig. 5

Fig. 6

Fig. 7